Europäisches Patentamt

European Patent Office

Office européen des brevets

(11) Veröffentlichungsnummer: **0 406 680 A2**

# EUROPÄISCHE PATENTANMELDUNG

(21) Anmeldenummer: **90112211.9**

(22) Anmeldetag: **27.06.90**

(51) Int. Cl.⁵: **C08J 9/26**

(30) Priorität: **04.07.89 DE 3921890**

(43) Veröffentlichungstag der Anmeldung:
**09.01.91 Patentblatt 91/02**

(84) Benannte Vertragsstaaten:
**DE FR GB IT SE**

(71) Anmelder: **Drägerwerk Aktiengesellschaft
Moislinger Allee 53-55
D-2400 Lübeck 1(DE)**

(72) Erfinder: **Pantaleon-Stemberg, Gerd
Fichtestrasse 6
D-2410 Mölln(DE)**

(54) Verfahren zur Herstellung eines Kunststoffilters.

(57) Ein Verfahren zur Herstellung eines Filters mit einem porösen Kunststoffkörper, bei dem als Ausgangsstoff ein Gemisch aus einem körnigen Kunststoffgrundmaterial mit einem Füllstoff zu einem festgefügten Formkörper verarbeitet wird, aus dem der Füllstoff herausgelöst wird, soll derart verbessert werden, daß es möglich wird, komplex geformte Teile als poröse Körper herzustellen. Dazu ist vorgesehen, daß das Kunststoffgrundmaterial ein pulverförmiges Thermoplast, Duroplast oder Elastomer ist, das mit dem Füllstoff im Spritzgußverfahren zu dem Formkörper gebildet wird.

EP 0 406 680 A2

## VERFAHREN ZUR HERSTELLUNG EINES KUNSTSTOFFILTERS

Die Erfindung betrifft ein Verfahren zur Herstellung eines Filters mit einem porösen Kunststoffkörper, bei dem ein Gemisch eines körnigen Kunststoffgrundmaterials und eines Füllstoffs zu einem festgefügten Formkörper verarbeitet wird, aus dem der Füllstoff herausgelöst wird.

Ein derartiges Verfahren ist in der DE-PS 745 498 beschrieben worden. Dort ist ein faseriges oder in ähnlicher Gestaltung vorliegendes Kunststoffmaterial zu einem festgefügten Formkörper kaltgepreßt, dem vor der Verarbeitung Salze beigemischt werden, die nach Fertigstellung des Formkörpers herausgelöst werden. Die nach der Herauslösung freien Plätze in dem Formkörper erhöhen seine Porösität.

Es ist weiterhin bekannt (DE-PS 887 265), porige Körper mittels einer Sinterung oder durch Verfritten herzustellen. Das bekannte Verfahren zur Herstellung von porösen Filterkörpern ist insofern nachteilig, als die Porösität im wesentlichen durch die Teilchengröße des körnigen Grundmaterials gebildet wird. Dies hat zur Folge, daß bei Einhaltung einer bestimmten Porengröße der Anteil Poren zur Gesamtfläche sehr gering ist.

Mit den bekannten Verfahren lassen sich keine komplexen Formen verwirklichen, da die Druckverteilung beim Pressen von z.B. hohen, dünnen Stegen sehr ungleichmäßig ist, was dazu führt, daß die Teile keine Festigkeit bzw. keine Porosität mehr haben.

Der vorliegenden Erfindung liegt somit die Aufgabe zugrunde, ein Verfahren der genannten Art so zu verbessern, daß es möglich wird, den Anteil Poren zum Grundmaterial merklich zu erhöhen und durch die Herstellung von komplex geformten, porösen Körpern unter möglichst sparsamem Verbrauch an Grundmaterial zu gewährleisten.

Die Lösung der Aufgabe erfolgt dadurch, daß das Kunststoffgrundmaterial ein pulverförmiges Thermoplast, Duroplast oder Elastomer ist, das mit dem Füllstoff im Spritzgußverfahren zu dem Formkörper gebildet wird.

Die Vorteile der Erfindung liegen im wesentlichen darin, daß beim Spritzgußverfahren nicht das Grundmaterial die Porengröße bestimmt, sondern der Füllstoff. Dadurch kann bei gleichzeitig weniger Materialeinsatz eine höhere Porosität erreicht werden, was sich günstig auf die Gesamtdurchlässigkeit auswirkt. Der Kunststoff kann sich infolge des Fließverhaltens während seiner Verarbeitung z. B. netzartig um den einzelnen Füllstoffkörper legen, diesen sozusagen umspinnen, ohne daß der Umfang des Füllstoffkörpers in einem größeren Bereich umschlossen würde. Der Fördervorgang im Spritzgußverfahren begünstigt diese strukturierte Umhüllung. Daher benötigt das Spritzgießverfahren bei höherer Filterwirksamkeit weniger Material. Außerdem ist die Herstellung derart gewonnener Formkörper wirtschaftlicher, eine vielfältige Gestaltungsmöglichkeit für die Filterkörper in bezug auf ihren Einsatzzweck ist leicht verwirklichbar.

Ein geeigneter thermoplastischer Stoff ist z.B. ein hochmolekulares Niederdruckpolyethylen. Dies ist beispielsweise unter der Bezeichnung GUR 812 im Handel erhältlich.

Als Füllstoff eignet sich ein wasserlösliches Salz, insbesondere Natriumchlorid oder Magnesiumsulfat.

Zur beispielhaften Herstellung eines erfindungsgemäßen Formkörpers wird ein Granulat des Thermoplaststoffes mit einer Korngröße von etwa 0,1 mm mit einem Füllstoff der Korngröße 0,2 mm gemischt und im Spritzgießverfahren gebildet. Dabei entstehen Formkörper mit einer Porengröße von etwa 0,1 mm, die eine freie wirksame Filterfläche von etwa 81 % des Gesamtkörpers besitzen, wobei die Porigkeit des Formkörpers über die Teilchengröße und/oder über das Mischungsverhältnis der beteiligten Komponenten gesteuert werden kann. Dabei müssen die Kunststoffteilchen immer kleiner sein als die Teilchen des Füllstoffs und das Mischungsverhältnis muß so gewählt werden, daß die Menge Füllstoff überwiegt. Bei einer vergleichbaren Ausführungsform, hergestellt im Sinterverfahren mit einem dabei erforderlichen Sinterkorndurchmesser von 0,5 mm, würde im Endergebnis die freie verfügbare Filterfläche lediglich 27 % des gesamten Formkörpers ausmachen.

## Ansprüche

1. Verfahren zur Herstellung eines Filters mit einem porösen Kunststoffkörper, bei dem ein Gemisch eines körnigen Kunststoffgrundmaterials und eines Füllstoffs zu einem festgefügten Formkörper verarbeitet wird, aus dem der Füllstoff herausgelöst wird, dadurch gekennzeichnet, daß das Kunststoffgrundmaterial ein pulverförmiges Thermoplast, Duroplast oder Elastomer ist, das mit dem Füllstoff im Spritzgußverfahren zu dem Formkörper gebildet wird.

2. Verfahren nach Anspruch 1, dadurch gekennzeichnet, daß der thermoplastische Stoff ein hochmolekulares Niederdruckpolyethylen ist.

3. Verfahren nach Anspruch 1 oder 2, dadurch gekennzeichnet, daß der Füllstoff ein wasserlösliches Salz ist.

4. Verfahren nach Anspruch 3, dadurch gekennzeichnet, daß das Salz Natriumchlorid ist.